# EUROPÄISCHE PATENTSCHRIFT

(11) **EP 1 702 802 B1**
(45) Veröffentlichungstag und Bekanntmachung des Hinweises auf die Patenterteilung: **23.07.2008**
(21) Anmeldenummer: 06405108.9
(22) Anmeldetag: 10.03.2006
(51) Int. Cl.: B60Q 11/00, B60R 16/02, B60Q 1/30, B60D 1/62, H01R 29/00

(54) **Steuerungsvorrichtung für Anhänger und Fahrradträger**
Control device for trailer and cycle carrier
Dispositif de commande pour remorque et porte-bicyclette

(30) Priorität: 15.03.2005 CH 4462005; 23.05.2005 CH 8802005; 31.10.2005 DE 202005017151 U
(43) Veröffentlichungstag der Anmeldung: 20.09.2006
(73) Patentinhaber: ConWys AG, 6023 Rothenburg (CH)
(72) Erfinder: Wystron, Alexander, 6005 Luzern (CH)
(74) Vertreter: Stenger, Watzke & Ring

(56) Entgegenhaltungen:
- EP-A- 0 546 370
- EP-A- 0 692 396
- EP-A- 0 773 139
- EP-A- 1 362 745
- US-A- 5 920 128
- US-A1- 2003 195 668

## Beschreibung

### Technisches Gebiet

Die Erfindung betrifft eine Vorrichtung für die Steuerung und Überwachung von mindestens einer sicherheitsrelevanten elektrischen und/oder elektronischen Anlage eines an ein Zugfahrzeug gekoppelten Anhängers oder einer am Zugfahrzeug befestigten Fahrradträger-Vorrichtung, und einen Leitungssatz für den vorteilhaften Anschluss einer erfindungsgemässen Vorrichtung an Zugfahrzeug und Anhänger, gemäss den Oberbegriffen der unabhängigen Ansprüche.

### Stand der Technik

Anhänger für Strassenfahrzeuge müssen in der Regel mit eigenen Leuchten wie Rücklichtern, Blinklichtern, Bremslichter ausgestattet sein, damit die Sicherheit im Strassenverkehr gewährleistet ist. Dies gilt analog auch für Fahrradträger-Vorrichtungen, welche am Heck eines Fahrzeugs montiert werden, und die Leuchten am Heck des Fahrzeugs verdecken.

Fällt eine Leuchte aus, wird dies dem Fahrer gemäss den gesetzlichen Bestimmungen durch ein akustisches oder optisches Signal angezeigt. Beispielsweise verlangt das deutsche Kraftfahrts-Bundesamt in seinem Typengenehmigungsverfahren, dass "Fahrzeuge, welche zum Ziehen eines Anhängers eingerichtet sind, mit einer besonderen Funktionskontrollleuchte für die Fahrtrichtungsanzeiger des Anhängers ausgestattet sein müssen, es sei denn, jede Funktionsstörung eines Fahrtrichtungsanzeigers des so gebildeten Zuges lässt sich an der Kontrolleinrichtung des Zugfahrzeugs ablesen" (Publikation KBA Nr.04-00 vom 20. Februar 2000). Die entsprechende konsolidierte EU-Richtlinie 78/933/EWG wiederum besagt unter Punkt 4.5.11 im Anhang I unter anderem, dass für Fahrtrichtungsanzeiger, die der Fahrzeugführer nicht direkt sehen kann, eine Funktionskontrolle vorgeschrieben ist. Diese darf optisch oder akustisch oder beides sein.

Zur Ansteuerung, zum Betrieb und zur Überwachung dieser sicherheitsrelevanten elektrischen Anlagen, insbesondere der als Fahrtrichtungsanzeiger dienenden Blinkerleuchten, existieren verschiedene technische Lösungen.

Fahrzeuge, welche von Anfang an als Zugfahrzeuge konzipiert worden sind, z.B. LKWs, verfügen über Bordnetze mit mehreren parallelen Steuerleitungen, welche über mehrpolige Steckverbindungen direkt mit dem Bordnetz des Anhängers verbunden werden und die entsprechenden Leuchten direkt betreiben können. Die verwendeten Steckverbindungen sind meist genormt, um ein problemloses Verbinden von verschiedenen Zugfahrzeugen mit verschiedenen Anhängern zu ermöglichen. Beispiele sind die 13-polige Steckverbindung nach ISO 11446 oder die siebenpolige Steckverbindung nach ISO 1724.

Fahrzeuge, wie beispielsweise PKWs, welche als Zugfahrzeug für kleine bis mittelgrosse Anhänger wie beispielsweise Campingwagen oder Pferdeanhänger verwendet werden können, verfügen in der Regel standardmässig weder über eine Anhängerkupplung noch über die notwendige elektrische Ausrüstung zum Betrieb der anhängerseitigen Leuchten und elektrischen Anlagen und müssen entsprechend nachgerüstet werden.

Bei einem bekannten und gebräuchlichen Nachrüstungs-Verfahren werden die parallelen Steuersignale für das Ein- und Ausschalten der anhängerseitigen Leuchten erzeugt, indem das an den entsprechenden Leuchten des Zugfahrzeugs anliegende Signal abgegriffen wird. Eine Steuerungsvorrichtung, welche in der Regel innerhalb des Zugfahrzeugs angebracht wird, interpretiert die gemessenen Steuersignale für die relevanten Leuchten des Zugfahrzeugs, und steuert die anhängerseitigen Leuchten so an, dass diese das Verhalten der entsprechenden Leuchten des Zugfahrzeugs nachbilden.

Um ein einfaches An- und Abkoppeln des anhängerseitigen Bordnetzes zu ermöglichen, ist die Steuerungsvorrichtung vorteilhaft mit einer mehrpoligen Steckverbindung verbunden, welche an der Aussenseite der Zugfahrzeug-Karosserie angebracht ist. In diese Steckverbindung kann das Steuerkabel des Anhängers eingesteckt werden; Steuerungsvorrichtung und anhängerseitiges Bordnetz sind verbunden.

Da die Steuersignale für die Fahrzeugleuchten heutzutage zunehmend komplizierter werden, beispielsweise durch Verwendung von pulsweitenmodellierten Signalen oder durch Abschaltung des Leuchtenkanals im Fehlerfall, wird die Signalinterpretation und damit auch die notwenige Elektronik aufwendiger. Aufgrund des unterschiedlichen Baus der Fahrzeuge ist zudem für jede Fahrzeugmarke und jedes Fahrzeugmodell eine eigene, spezielle Lösung betreffend einzubauendem Leitungssatz, elektronischer Baugruppen und gegebenenfalls Betriebssoftware notwendig. Diese bekannte technische Lösung ist deshalb aufwendig und kostenintensiv.

Durch die wachsende Komplexität der elektrischen Anlagen in modernen Fahrzeugen nahm in der Vergangenheit die Menge der zum Betrieb notwendigen Verkabelung sehr stark zu. Der mit den resultierenden dicken Kabelbäumen einher gehende Aufwand führte zu erhöhten Kosten. Um die Anzahl Leitungen zu verringern, wurden in der Folge verschiedene Multiplex-Verdrahtungssysteme entwickelt und standardisiert, die jeweils für bestimmte Anwendungstypen optimiert sind. Mit solchen seriellen Daten-Bussen werden Steuerungsbefehle, beispielsweise für Fahrzeugleuchten, anstatt zeitgleich über mehrere parallele Steuerleitungen zeitlich gestaffelt über einige wenige Leitungen übertragen.

Wird vom Fahrer eines Fahrzeugs beispielsweise die Fussbremse betätigt, versendet eine in geeigneter Weise mit der Fussbremse verbundene erste elektronische Einheit eine Nachricht auf einen entsprechenden seriellen Daten-Bus. Eine zweite, ebenfalls an den seriellen Daten-Bus angeschlossene, elektronische Einheit, welche den Betrieb der Leuchten steuert und überwacht, kann diese Nachricht empfangen und eine damit verbundene Aktion ausführen. Im beschriebenen Fall werden die Bremsleuchten eingeschaltet.

Dieses Prinzip kann auch für die Ansteuerung von Leuchten in Anhängern genutzt werden. EP 0'692'396 A1 zeigt eine elektrische Steuerungsvorrichtung, welches an ein Datennetz eines Zugfahrzeugs angeschlossen wird, und welches aufgrund der vom Fahrzeug an die Steuerungsvorrichtung gesendeten Daten elektrische Verbraucher eines Anhängers ansteuert.

Die aus dem Stand der Technik bekannten Steuerungsvorrichtungen sind jeweils nur für einen spezifischen Typ eines Zugfahrzeugs konzipiert. Wird eine solche Steuerungsvorrichtung in ein Zugfahrzeug eingebaut, ist zudem eine Anpassung der Bordelektronik mittels einer Diagnoseschnittstelle notwendig, um der Steuerungsvorrichtung zu erlauben, die dafür vorgesehenen Warn- und Kontrollleuchten des Zugfahrzeugs über den seriellen Bus anzusteuern.

Die aufwendige Installation solcher Steuerungsvorrichtungen und die spezifische Herstellung von Steuerungsvorrichtungen führen zu hohen Gesamtkosten für die Ausrüstung/Nachrüstung von Fahrzeugen als Zugfahrzeuge.

### Darstellung der Erfindung

Aufgabe der Erfindung ist es, eine Steuerungsvorrichtung der eingangs erwähnten Art zur Verfügung zu stellen, welche für möglichst viele Zugfahrzeug-Typen im wesentlichen identisch gestaltet und kostengünstig installiert werden kann, insbesondere ohne aufwendige Zusatzverkabelung und/oder Neukonfiguration der Bordelektronik.

Diese und andere Aufgaben werden gelöst durch eine erfindungsgemässe Vorrichtung gemäss unabhängigem Anspruch 1, sowie einem erfindungsgemässem Verfahren zum Betrieb einer erfindungsgemässen Steuerungsvorrichtung gemäss dem unabhängigen Anspruch 14. Weitere vorteilhafte Varianten sind in den abhängigen Ansprüchen gegeben.

Eine erfindungsgemässe Steuerungsvorrichtung hört den seriellen Daten-Bus des Zugfahrzeugs ab, und filtert aus den empfangenen Nachrichten die relevanten Nachrichten heraus, insbesondere Nachrichten mit Anweisungen an die elektronischen Einheiten, welche die Fahrzeugleuchten steuern. Empfängt nun die erfindungsgemässe Steuerungsvorrichtung einen Einschaltbefehl für eine fahrzeugseitige Leuchte, schaltet sie auch die analoge anhängerseitige Leuchte ein. Ist diese anhängerseitige Leuchte defekt, wird das von der erfindungsgemässen Steuerungsvorrichtung erkannt, und dem Fahrer über ein Interface oder Anzeigemittel mitgeteilt. Um teure Zusatzverkabelungen oder Neukonfigurationen der Bordelektronik zu vermeiden, werden dazu vorteilhaft bereits vorhandene Mittel verwendet, die nicht für das Anzeigen von Statusmeldungen über die anhängerseitigen Leuchten vorgesehen sind. In einer weiteren vorteilhaften Ausgestaltungsform ist eine erfindungungsgemässe Steuerungsvorrichtung zudem ohne grösseren Aufwand an einen einzelnen Fahrzeugtyp anpassbar, oder sie kann den Fahrzeugtyp selbsttätig erkennen.

### Kurze Beschreibung der Zeichnungen

Im Folgenden werden die erfindungsgemässe Steuerungsvorrichtung, und der erfindungsgemässe Leitungssatz anhand von Zeichnungen erläutert.
Figur 1 zeigt eine schematische Darstellung der erfindungsgemässen Steuerungsvorrichtung mit den Verbindungen zu Zugfahrzeug und Anhänger.
   Die Figuren 1a , 1b und 1c zeigen schematisch Darstellungen der erfindungsgemässen Steuerungsvorrichtung mit den Verbindungen zu Zugfahrzeug und Anhänger in verschiedenen Ausführungsformen.
Figur 2 zeigt eine schematische Darstellung einer elektronischen Vorrichtung für die Verwendung in einer erfindungsgemässen Steuerungsvorrichtung.
Figur 3 zeigt eine weitere Ausführungsform einer elektronischen Vorrichtung für die Verwendung in einer erfindungsgemässen Steuerungsvorrichtung.
Figur 3a zeigt schematisch eine Substitutionsschaltung für eine defekte Leuchte, gesteuert durch eine erfindungsgemässe Steuerungsvorrichtung.
Figuren 4 und 5 zeigen zwei Ausführungsformen eines Leitungssatzes für den vorteilhaften Anschluss einer erfindungsgemässen Steuerungsvorrichtung an das Zugfahrzeug und den Anhänger.
Figur 6 zeigt eine schematische Darstellung eines Computerprogramms, welches auf einem Kontrollmodul der elektronischen Vorrichtung implementiert werden kann und den korrekten Betrieb der erfindungsgemässen Steuerungsvorrichtung sicherstellt.

### Ausführung der Erfindung

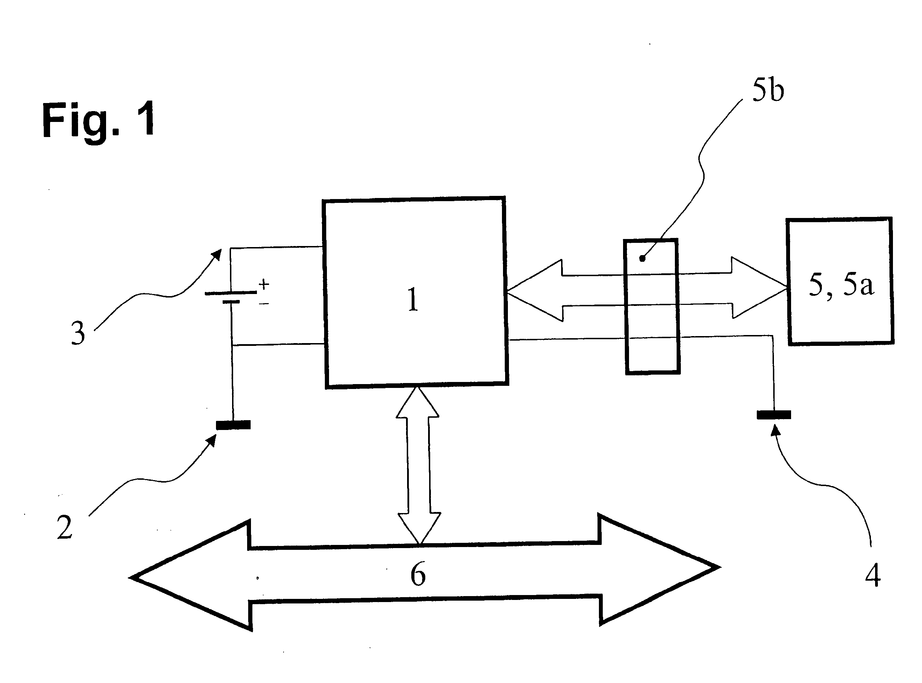

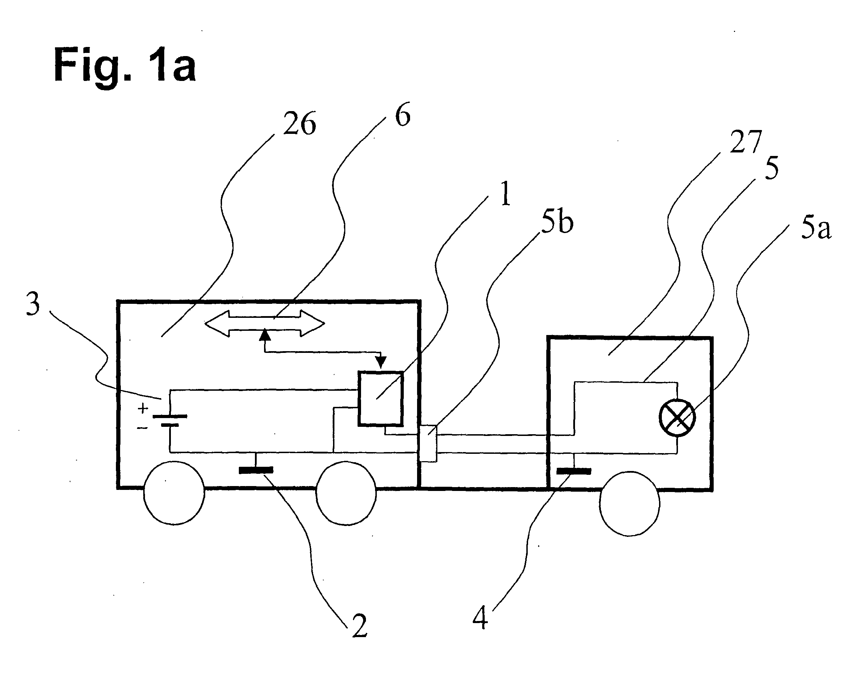

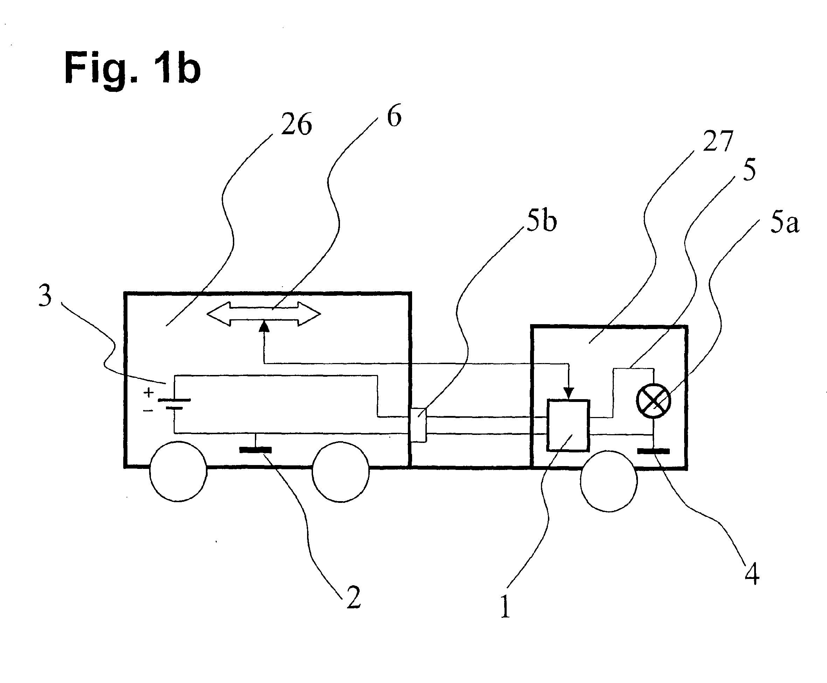

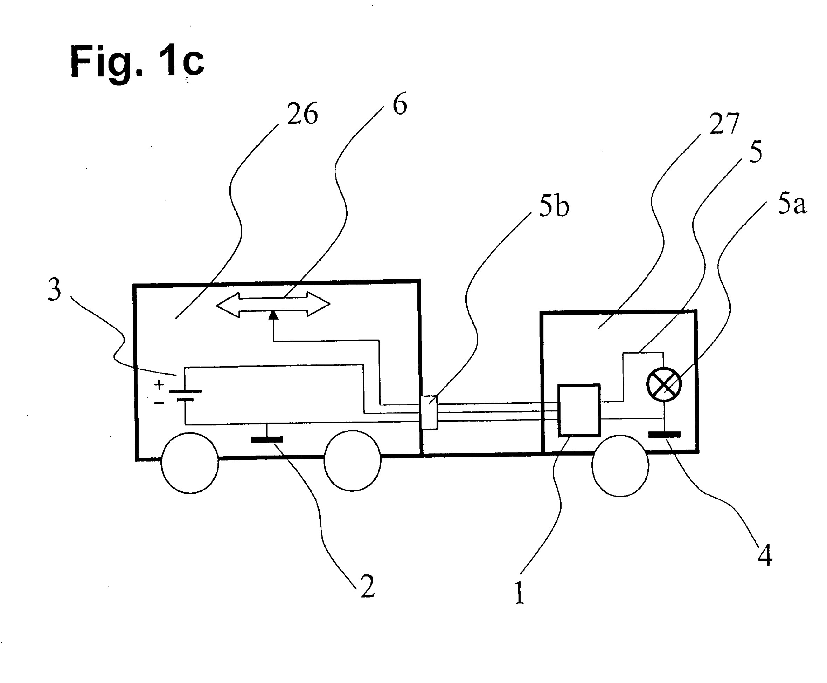

Figur 1 zeigt schematisch eine erfindungsgemässe Steuerungsvorrichtung 1 mit den Verbindungen zu einem Zugfahrzeug 26 und zu einem an das Zugfahrzeug 26 angekoppelten Anhänger 27. Die Versorgung der Steuerungsvorrichtung 1 mit Gleichstrom aus der Fahrzeugbatterie ist sichergestellt durch den Anschluss an eine mit dem positiven Anschluss verbundene elektrische Speisung 3 und an eine Masse 2 des Zugfahrzeugs 26, welche ihrerseits mit dem negativen Anschluss der Fahrzeugbatterie verbunden ist. Je nach der im entsprechenden Fahrzeugtyp verwendeten Batterie beträgt die zur Verfügung stehende Spannung 12 V oder mehr. Die Steuerungsvorrichtung 1 ist ebenfalls mit der Masse 4 des Anhängers 27 verbunden.

Der Anschluss an das Bordnetz 5 und die Masse 4 des Anhängers 27 kann über parallele Leitungen realisiert sein, mit welchen die elektrischen Anlagen 5a, insbesondere die verschiedenen Leuchten des Anhängers 27, direkt betrieben werden können. Dies geschieht beispielsweise mit einem sieben- oder 13-poligen Kabel, welches mittels einer genormten Steckverbindung (ISO 1724 bzw. ISO 11446) mit der Steuerungsvorrichtung 1 verbunden werden kann. Ebenfalls möglich ist ein eine Übertragung der Steuersignale zwischen Steuerungsvorrichtung 1 und Bordnetz 5 mittels eines separaten seriellen Daten-Busses.

Die Steuerungsvorrichtung 1 ist an mindestens einen seriellen Daten-Bus 6 des Zugfahrzeugs 26 angeschlossen, über welchen sie insbesondere Steuerbefehle an die Leuchten des Zugfahrzeugs 26, aber auch andere Steuerbefehle und Nachrichten, abhören und gegebenenfalls Nachrichten versenden kann.

Für die Ansteuerung von elektrischen Anlagen wie beispielsweise Leuchten, Fensterhebern, Türverriegelungen und Aktuatoren in Sitzen, Spiegeln und Scheinwerfern, aber auch zur Abfrage von Sensoren, sind im Automobilbau verschiedene genormte serielle Daten-Bus-Systeme gebräuchlich, wie beispielsweise der MI-Bus von Motorola, ein serielles Ein-Draht-Kommunikationsprotokoll, oder der verbreitete CAN-Bus (Controller Area Network), welcher von der Firma Bosch seit 1991 für die Verwendung in Kraftfahrzeugen eingesetzt wird. Die physikalische Ebene des CAN-Bus ist unter ISO 11898 standardisiert. In einer schnellen Ausführung (Class C, bis 1 Mbit/s) kann der CAN-Bus auch für Anwendungen benützt werden, die eine sehr schnelle und sichere Datenübertragung benötigen, wie beispielsweise Motorensteuerung, Drive-by-wire und Brake-by-wire.

Für die Ansteuerung von nicht-kritischen elektrischen und elektronischen Anlagen innerhalb von Fahrzeugen wird häufig eine Class-B-Variante des CAN-Busses verwendet, welche Daten mit bis zu 125 kBit/s übertragen kann. Für CAN-Busse können Shielded-Twisted-Pair-Leitungen, Unshielded-Twisted-Pair-Leitungen oder Single-Wire-Leitungen verwendet werden, mit abnehmender Übertragungsqualität. Für kostensensitive Anwendungen mit geringem Datenaufkommen, wie die Ansteuerung von elektrischen Verbrauchern, wo eine Datenrate unter 50 kBit/s ausreicht, genügt die kostengünstige Single-Wire-Konfiguration eines CAN-Busses.

Für die Funktion der erfindungsgemässen Steuerungsvorrichtung 1 ist jedoch die physikalische Realisierung und der Typ des verwendeten seriellen Daten-Busses 6 prinzipiell unerheblich. Es wäre beispielsweise auch möglich, dass in Zukunft draht- oder litzen-basierte Daten-Bus-Systeme auch für kostensensitive Anwendungen durch lichtwellenleiter-basierte Daten-Bus-Systeme abgelöst werden, oder dass andere Bus-Protokolle sich durchsetzen.

Figur 1 a zeigt zur Veranschaulichung ein vereinfachtes, schematisches Beispiel eines mit einer erfindungsgemässen Steuerungsvorrichtung 1 ausgestatteten Zugfahrzeugs 26 mit einem an diesem angekoppelten Anhänger 27. Die erfindungsgemässe Vorrichtung 1 ist an einen seriellen Daten-Bus 6 des Zugfahrzeugs 26 angeschlossen, von welchem es Daten empfangen kann. Diese Daten können insbesondere drahtlos mittels bekannten Methoden wie beispielsweise Infrarot oder Funk übertragen werden oder über ein verbindendes Leiterkabel.

Die Vorrichtung 1 ist auch leitend verbunden mit der elektrischen Speisung 3 und der Massen 2, 4 des Zugfahrzeugs 26 und des Anhängers 27.

Im gezeigten vereinfachten Beispiel verfügt der Anhänger 27 lediglich über eine Leuchte 5a, beispielsweise ein Bremslicht. Wenn nun die erfindungsgemässe Vorrichtung 1 auf dem seriellen Daten-Bus 6 eine Steueranweisung an ein Bremslicht des Zugfahrzeugs empfängt, steuert es das Bremslicht 5a des Anhängers 27 an, indem es die entsprechende Steuerleitung des Anhänger-Bordnetzes 5 mit Spannung versorgt. Natürlich können zahlreiche weitere Anschlüsse für andere Funktionen im Anhänger 27 wie Blinklichter, Beleuchtung des Nummernschildes, Rückstrahler usw. mit der Steuerung in Funktion genommen werden, indem die entsprechende Anzahl Anschlüsse von der Vorrichtung 1 abgehen. Diese führen zu einer Steckverbindung 5b, die zwischen dem Zugfahrzeug 26 und dem Anhänger 27 angeordnet ist. Von dieser Steckverbindung 5b aus verlaufen die gewünschten Leitungen in das Bordnetz 5 des Anhängers 26 zu den entsprechenden elektrischen Lasten.

Figur 1 a zeigt zur Veranschaulichung ein vereinfachtes, schematisches Beispiel eines mit einer erfindungsgemässen Steuerungsvorrichtung 1 ausgestatteten Zugfahrzeugs 26 mit einem an diesem angekoppelten Anhänger 27. Die erfindungsgemässe Vorrichtung 1 ist an einen seriellen Daten-Bus 6 des Zugfahrzeugs 26 angeschlossen, von welchem es Daten empfangen kann. Diese Daten können insbesondere drahtlos mittels bekannten Methoden wie beispielsweise Infrarot oder Funk übertragen werden oder über ein verbindendes Leiterkabel.

Die Vorrichtung 1 ist auch leitend verbunden mit der elektrischen Speisung 3 und der Massen 2, 4 des Zugfahrzeugs 26 und des Anhängers 27.

Im gezeigten vereinfachten Beispiel verfügt der Anhänger 27 lediglich über eine Leuchte 5a, beispielsweise ein Bremslicht. Wenn nun die erfindungsgemässe Vorrichtung 1 auf dem seriellen Daten-Bus 6 eine Steueranweisung an ein Bremslicht des Zugfahrzeugs empfängt, steuert es das Bremslicht 5a des Anhängers 27 an, indem es die entsprechende Steuerleitung des Anhänger-Bordnetzes 5 mit Spannung versorgt. Natürlich können zahlreiche weitere Anschlüsse für andere Funktionen im Anhänger 27 wie Blinklichter, Beleuchtung des Nummernschildes, Rückstrahler usw. mit der Steuerung in Funktion genommen werden, indem die entsprechende Anzahl Anschlüsse von der Vorrichtung 1 abgehen. Diese führen zu einer Steckverbindung 5b, die zwischen dem Zugfahrzeug 26 und dem Anhänger 27 angeordnet ist. Von dieser Steckverbindung 5b aus verlaufen die gewünschten Leitungen in das Bordnetz 5 des Anhängers 26 zu den entsprechenden elektrischen Lasten.

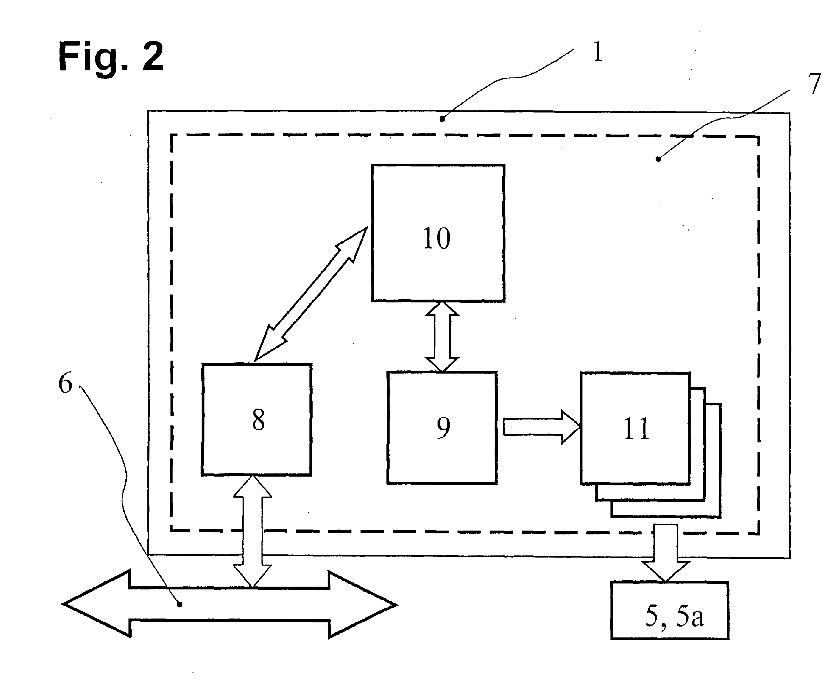

Im Gegensatz zu Fig. 1 a ist in Fig. 1 bund 1 c die Vorrichtung 1 nicht im Zugfahrzeug 26 sondern im Anhänger 27 angebracht. Daher verlaufen in diesen Ausführungsformen diejenigen Anschlüsse, die zum Zugfahrzeug gelangen sollen, über die Steckverbindung 5b. Diese umfasst insbesondere die Verbindung zur elektrischen Speisung 3. Wiederum können die Daten von CAN-Bus, wie in Fig. 2b dargestellt, drahtlos zur Vorrichtung gelangen oder, wie in Fig. 1c dargestellt, mittels einer leitenden Verbindung. In diesem Fall sind demnach mindestens zwei Leitungen notwendig von der Vorrichtung 1 zur Steckverbindung 5b, im Fall von Fig. 1b sogar nur eine. Bei Bedarf werden dennoch weitere Leitungen vom Zugfahrzeug 26 zur Steckverbindung 5b und weiter zum Bordnetz 5 des Anhängers 27 angebracht, beispielsweise eine Leitung für ein direktes Bremslicht, eine für die Verbindung der Massen 2 und 4 und/oder andere Leitungen. Anhängerseitig können zahlreiche Leitungen von der Vorrichtung 1 ins Bordnetz 5 führen entsprechend der Anzahl der verwendeten Lasten im Anhänger. Der Vorteil der Anordnungen in den Figuren 1b und 1c gegenüber 1a ist, dass die Steckverbindung 5b weniger Pole aufweisen muss.

Figur 2 zeigt schematisch den Aufbau einer elektronischen Vorrichtung 7, zur Durchführung der Tätigkeiten einer erfindungsgemässen Steuerungsvorrichtung.

Ein Sender-Empfänger-Modul 8 stellt die Kommunikation mit einem seriellen Daten-Bus 6 sicher, und bildet einen Knotenpunkt im entsprechenden Bus-Netz. Ein Sender-Empfänger-Modul 8 besteht aus einer an den Bus 6 angeschlossenen Transceiver-Einheit und einer nachgeschalteten Controller-Einheit. Es ist auch möglich, dass das Modul 8 als ein reines Empfänger-Modul ausgestaltet ist, das nur Nachrichten vom seriellen Daten-Bus 6 abhören kann.

Das Sender-Empfänger-Modul 8 hört die auf dem seriellen Daten-Bus 6 gesendeten Nachrichten ab und teilt sie einem Kontrollmodul 10 mit. Dieses Kontrollmodul 10 steuert und überwacht die elektronische Vorrichtung 7, und damit auch die Funktionen der Steuerungsvorrichtung 1.

Das Kontrollmodul 10 erteilt Anweisungen an ein Ansteuerungsmodul 9, welches Steuersignale zur Ansteuerung der elektrischen und/oder elektronischen Anlagen 5a des Anhängers erzeugt. Im gezeigten Beispiel schalten die erzeugten Steuersignale Endstufen 11, also die mittels paralleler Steuerleitungen betriebenen elektrischen und/oder elektronischen Anlagen 5a des Anhängers. Möglich ist auch, dass das Ansteuerungsmodul 9 digitale Steuersignale erzeugt, welche mittels eines Daten-Busses zum Bordnetz des Anhängers 5 übertragen werden.

Zur Schonung der verwendeten elektronischen Bauteile verfügt die elektronische Vorrichtung 7 mit Vorteil über eine stabilisierte und geglättete Stromversorgung, um schädliche Spannungs- und Stromspitzen der elektrischen Speisung fern zu halten.

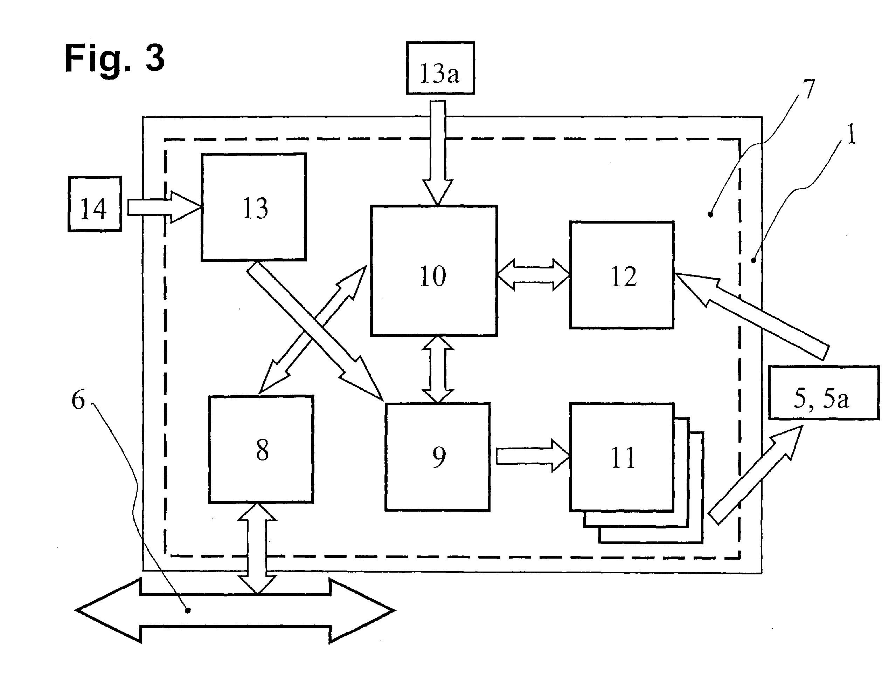

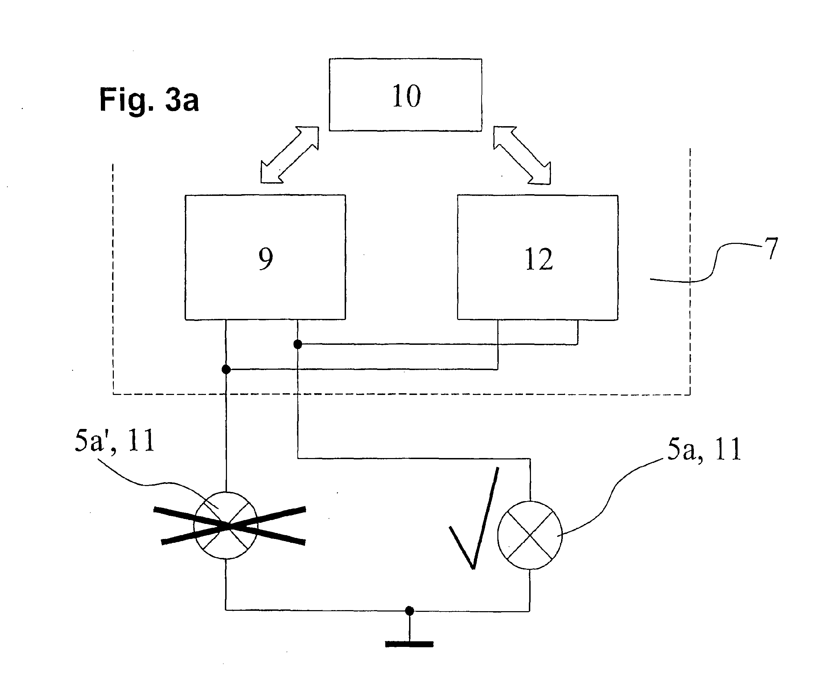

Figur 3 zeigt eine weitere Ausführungsform einer elektronischen Vorrichtung 7.

Ein Überwachungsmodul 12 überwacht den Betrieb und die korrekte Funktion der Endstufen 11 bzw. der elektrischen und elektronischen Verbraucher 5a des Anhängers. Schadhafte Leuchten können beispielsweise über die Messung des Stromflusses detektiert werden. Der Status der überwachten Endstufen 11 bzw. elektrischen Anlagen 5a wird vom Überwachungsmodul 12 dem Kontrollmodul 10 in geeigneter Weise mitgeteilt.

Gemäss den gesetzlichen Bestimmungen muss ein Defekt eines Fahrtrichtungsanzeigers dem Fahrer angezeigt werden. Zusätzlich ist es von Vorteil, wenn auch andere Defekte und Störungen dem Fahrer angezeigt werden können. Die erfindungsgemässe Steuerungsvorrichtung kann dies beispielsweise über eine eigene Ausgabeeinheit, welche vorteilhaft im Fahrerraum angebracht ist, dem Fahrer optisch und/oder akustisch mitteilen, beispielsweise durch einen Summer, ein Display, einen Lautsprecher, eine Sprachmeldung usw.

Alternativ kann die erfindungsgemässe Steuerungsvorrichtung auch dem Fahrzeug mitteilen, dass der entsprechende Blinker des Zugfahrzeugs defekt sei, was zu einer entsprechenden Fehlermeldung des Zugfahrzeugs führt.

Andere Fahrzeugtypen verfügen über vorkonfigurierte Mittel, um den Ausfall von Leuchten eines Anhängers anzuzeigen. Eine erfindungsgemässe Steuerungsvorrichtung kann deshalb auch solche Mittel benützen, um eine defekte Anhängerleuchte zu melden. Dazu ist in aller Regel eine entsprechende Konfiguration der fahrzeugseitigen Elektronik mittels einer Diagnoseschnittstelle notwendig, um die entsprechenden Warnleuchten, Interface-Funktionen o.ä. freizuschalten.

In einer vorteilhaften Ausgestaltung sendet deshalb eine erfindungsgemässe Steuerungsvorrichtung eine Nachricht über den Datenbus, welche die fahrzeugseitige Elektronik ohne veränderte Konfiguration interpretieren kann. Somit entfällt eine Neukonfiguration, was die Installation kostengünstiger macht. Geeignete fahrzeugseitige Ressourcen sind insbesondere Display, Kontrollleuchte, Summer, Sprachausgabe, oder eine auch Kombination davon.

Eine erfindungsgemässe Steuerungsvorrichtung sollte in geeigneter Weise z.B. auf die Meldung einer defekten Leuchte reagieren. Beispielsweise kann das Kontrollmodul 10 das Ansteuerungsmodul 9 anweisen, als Ersatz für eine vom Überwachungsmodul 12 als defekt gemeldeten Leuchte des Anhängers eine andere Leuchte des Anhängers anzusteuern. Dies wird durch Figur 3a versinnbildlicht.

Die Ansteuerungsvorrichtung 9 einer elektronischen Vorrichtung 7 steuert eine Endstufe 11 an, beispielsweise die linke Blinkerleuchte 5a'. Das Überwachungsmodul 12 überwacht die Funktion der Leuchte 5a'. Wenn nun die genannte Leuchte ausfällt, registriert dies das Überwachungsmodul 12, und meldet den Fehler dem Kontrolmodul 10. Dieses wiederum weist daraufhin das Ansteuerungsmodul 9 an, anstelle des defekten linken Blinkers 5a' die linke Standlichtleuchte des Anhängers anzusteuern. Das Standlicht wird so zum Ersatzblinker, bis der Fahrer so bald wie möglich eine Werkstatt aufsuchen kann.

In einer weiteren vorteilhaften Ausgestaltung der elektronischen Vorrichtung 7 wertet ein Interpretationsmodul 13 das Steuersignal von einer oder mehreren Leuchten 14 des Zugfahrzeugs aus, und stellt die erhaltenen Informationen über den Status der überwachten Zugfahrzeugleuchten dem Kontrollmodul zur Verfügung. Beispielsweise kann das Bremslichtsteuersignal des Zugfahrzeugs dazu genutzt werden, bei einem eventuellen Ausfall der erfindungsgemässen Steuerungsvorrichtung die Bremslichter des Anhängers notfallmässig weiterzubetreiben, was ein sehr wichtiger Sicherheitsaspekt ist.

In einer anderen Variante der elektronischen Vorrichtung 7 erhält das Kontrollmodul 10 Daten von einem Anpassungsmodul 13a. Dieses Anpassungsmodul 13a erlaubt die Anpassung der erfindungsgemässen Steuerungsvorrichtung an einen bestimmten Fahrzeugtyp. Das Anpassungsmodul 13a kann sowohl ein integraler Bestandteil der Steuerungsvorrichtung sein, als auch eine externe Vorrichtung. Es kann auch nur temporär mit der Steuerungsvorrichtung verbunden sein.

In einer einfachen Ausgestaltungsform kann ein Anpassungsmodul 13a ein geeignetes Mittel sein (z.B. Drehschalter, Mehrfachschalter, Dreh-Impulsgeber, Tastatur), welches es einer Person erlaubt, dem Kontrollmodul 10 einen digitalen Wert mitzuteilen, den dieses dann einem bestimmten, vorprogrammierten Zugfahrzeugtyp zuordnen kann. Das Kontrollmodul 10 ist damit in der Lage, seine Funktionen, und die der anderen Module an diesen Fahrzeugtyp anzupassen.

Das Anpassungsmodul 13a kann auch als ein austauschbares oder umprogrammierbares Speicherelement gestaltet sein, oder als eine Vorrichtung, die geeignet ist, eine Programmierung des Kontrollmoduls 10 anzupassen oder zu ändern.

Die besprochenen Module 12, 13 und 13a können alle in einer erfindungsgemässen Steuerungsvorrichtung integriert sein, wie in Figur 3 gezeigt. Es ist jedoch auch möglich, nur eines oder zwei dieser Module 12, 13 und 13a in der Steuerungsvorrichtung zu verwenden.

Es ist möglich, die elektronische Vorrichtung 7 mit integrierten Schaltkreisen bzw. Mikrochips auszustatten, auf welchen zwei oder mehrere der obenstehend erwähnten Module integriert sind.

Solch eine Lösung ermöglicht eine kompaktere und kostengünstigere Bauweise, da die Anzahl Bauteile und deren Grösse reduziert ist.

Um eine unnötige Entladung der Fahrzeugbatterie zu vermeiden, ist es notwendig, dass eine erfindungsgemässe Steuerungsvorrichtung in einen stromsparenden Modus wechselt, sobald der Fahrer des Zugfahrzeuges den Zündschlüssel auf die "Aus"-Position dreht. Ein mögliche Lösung dafür ist das Abgreifen eines entsprechenden Signals an der Zündvorrichtung im Fahrerraum mittels eines Kabels. Dazu muss jedoch ein zusätzliches Kabel im Fahrzeuginnern verlegt werden, was aufwendig und kostenintensiv ist. In einer vorteilhaften weiteren Variante einer erfindungsgemässen Steuerungsvorrichtung kann auf diesen Verkabelungsaufwand verzichtet werden. Eine solche Steuerungsvorrichtung filtert aus den auf dem Daten-Bus empfangenen Daten Nachrichten betreffend das Ein- und Ausschalten der elektrischen Verbraucher oder ein Zündsignal aus. Aufgrund dieser Daten kann dann die erfindungsgemässe Steuerungsvorrichtung die elektrischen Verbraucher des Anhängers ein- oder ausschalten, und zudem seinen eigenen Stromverbrauch minimieren.

Empfängt beispielsweise eine solche erfindungsgemässe Steuerungsvorrichtung eine Nachricht auf dem Daten-Bus, welche mit dem Ausschalten der Zündung verknüpft ist, kann sich die elektronische Vorrichtung auf das Abschalten des fahrzeugseitigen Busses vorbereiten, und selber einen stromsparenden Zustand einnehmen. In diesem Zustand ist die erfindungsgemässe Steuerungsvorrichtung jedoch noch immer in der Lage, ein entsprechendes Einschaltsignal auf dem Fahrzeug-Bus abzuhören, und sich wieder zu aktivieren.

In einer weiteren vorteilhaften Variante kann zur Schonung der Fahrzeugbatterie eine erfindungsgemässe Steuerungsvorrichtung das auf dem Datenbus empfangene Zündungssignal der Bordelektronik verwenden, um sehr stromintensive nichtsicherheitsrelevante Verbraucher im Anhänger abzuschalten, wenn der Fahrzeugmotor und damit auch der Alternator nicht läuft, während sicherheitsrelevante Verbraucher wie die verschiedenen Leuchten, weiterhin in Betrieb bleiben. Dies kann zum Beispiel notwendig sein, wenn der Fahrer kurzzeitig den Motor ausschaltet, beispielsweise an einer roten Ampel oder einer geschlossenen Schranke. Stromintensive Verbraucher sind zum Beispiel Kühlschränke, anhängerseitige Batterien, Wechselrichter, Innenbeleuchtung, Kühlaggregate, usw.

Nach Empfang eines Motorenstartsignals kann dann die erfindungsgemässe Steuerungsvorrichtung die temporär abgeschalteten Verbraucher wieder in Betrieb nehmen bzw. mit Strom versorgen.

Möglich ist auch eine gewisse zeitliche Verzögerung des Aus- und Einschaltens der Verbraucher.

Im Prinzip ist es für den Betrieb einer erfindungsgemässen Steuerungsvorrichtung ausreichend, diese mit nur einem Anschluss an eine Stromversorgung auszustatten. Wenn in solch einem Fall jedoch die Stromversorgung der Steuerungsvorrichtung ausfällt, beispielsweise aufgrund eines Defekts im Versorgungskabel, hat der Fahrer in einer solchen Konfiguration keine Möglichkeit, dies zu merken. Da die erfindungsgemässe Steuerungsvorrichtung ohne Strom ist, kann sie auch keine entsprechende Fehlermeldung ausgeben.

In einer weiteren vorteilhaften Variante verfügt eine erfindungsgemässe Steuerungsvorrichtung deshalb über eine zweite, separat geführte Speisungsleitung. Falls aus irgend einem Grund die Stromversorgung auf einer Leitung ausfällt, verfügt die Steuerungsvorrichtung noch über genügend Energie, eine Fehlermeldung zu versenden bzw. dem Fahrer den Defekt über ein geeignetes Mittel anzuzeigen. Zu diesem Zweck überwacht die Steuerungsvorrichtung die beiden Speisungsleitungen stetig auf ihre korrekte Funktion. Möglich ist auch die Verwendung einer kompakten Batterie für Notstromversorgung der erfindungsgemässen Steuerungsvorrichtung.

Es ist möglich, den Anschluss der erfindungsgemässen Steuerungsvorrichtung an die entsprechenden Leitungen und Anschlüsse des Zugfahrzeugs und des Anhängers über einzelne Leitungen vorzunehmen. Um den Zeitaufwand und damit die Kosten für einen Einbau einer erfindungsgemässen Steuerungsvorrichtung in ein nachzurüstendes Zugfahrzeug klein zu halten, ist es jedoch vorteilhaft, einen geeignet gestalteten Leitungssatz zur Verfügung zu haben, welcher das Anschliessen der Steuerungsvorrichtung 1 mit wenigen Handgriffen und auch mit möglichst wenigen Fehlerquellen erlaubt.

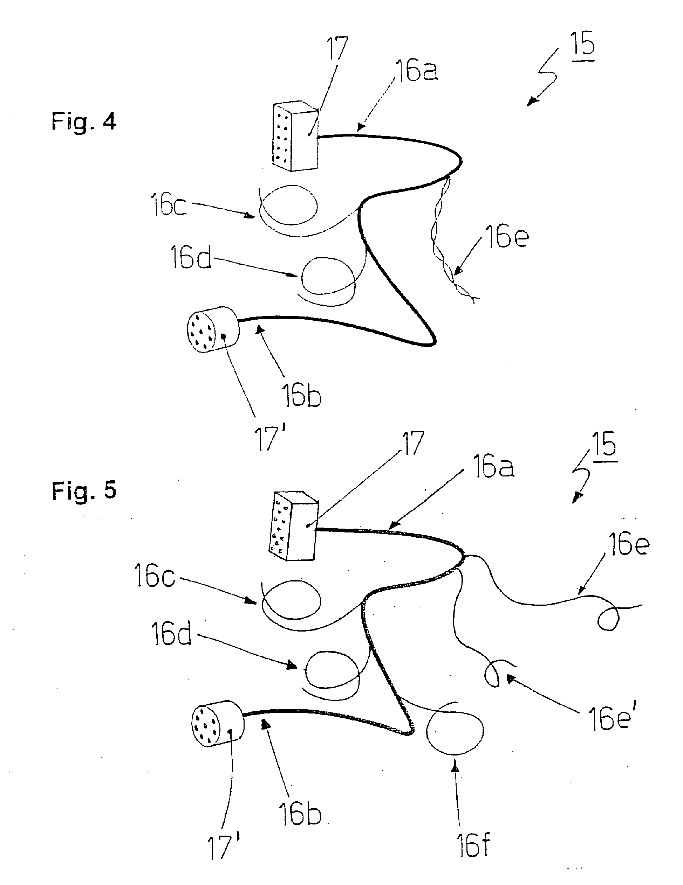

Figur 4 zeigt einen mehradrigen Leitungssatz 15 für die Verwendung zum Anschluss einer erfindungsgemässen Steuerungsvorrichtung. Ein erstes Ende 16a des Leitungssatzes 15 ist an die Steuerungsvorrichtung anschliessbar. Um einen einfachen und sicheren Anschluss zu gewährleisten, ist das erste Ende 16a vorteilhaft mit einer mehrpoligen Steckverbindung 17 ausgestattet, welcher mit einem an der Steuervorrichtung angebrachten entsprechenden Gegenstück verbunden werden kann.

Ein zweites Ende 16b wird mit dem Bordnetz 5 des Anhängers verbunden. Dazu ist das zweite Ende 16b mit Vorteil ebenfalls mit einer Steckverbindung 17' ausgestattet. Dies kann beispielsweise eine 13-polige Steckverbindung nach ISO 11446 oder wie in Figur 4 schematisch angedeutet eine siebenpolige Steckverbindung nach ISO 1724 sein. Mit Vorteil wird die Steckverbindung 17' direkt als Steckverbindung 5b verwendet. Von diesen Anschlüssen dient einer dem Anschluss an die Masse des Anhängers, die restlichen Anschlüsse dienen dem Betrieb der gesetzlich vorgeschriebenen Beleuchtungselemente und -funktionen. Natürlich sind auch andere Steckverbindungen möglich.

Ein drittes Ende 16c des Leitungssatzes 15 dient dem Anschluss an die Masse des Zugfahrzeugs, ein viertes Ende 16d dem Anschluss an die elektrische Speisung. Ein fünftes Ende 16e ist als ein verdrilltes zweiadriges Leitungspaar (Unshielded-Twisted-Pair) gestaltet, welches an einen auf einem zweiadrigen Leitungsnetz beruhenden seriellen Daten-Bus angeschlossen werden kann. Dies kann beispielsweise ein CAN-Bus sein.

Für die gezeigte Variante des Leitungssatzes 15 ist eine zehnpolige Steckverbindung 17 ausreichend: Ein gemeinsamer Anschluss für die Massen des Zugfahrzeugs und des Anhängers, die elektrische Speisung des Zugfahrzeugs, die Leitungen zum Bordnetz des Fahrzeuganhängers für den Betrieb der gesetzlich vorgeschriebenen Beleuchtungselemente, und zwei Anschlüsse für den seriellen Daten-Bus. Vorteilhaft wird jedoch eine Steckverbindung 17 verwendet, welche über zusätzliche Anschlüsse verfügt, die im konkreten Fall ungenutzt bleiben können. Bei Verwendung der erfindungsgemässen Steuervorrichtung für einen Anhänger mit 13poligem Bordnetz-Anschluss muss dann nur ein anderer Leitungssatz verwendet werden, ohne dass die Steuervorrichtung mit einem anderem Steckertyp versehen werden muss.

Bei Verwendung von 13poligen Steckverbindungen kann eine Leitung als Dauerstromversorgung von zusätzlichen elektrischen Anlagen im Anhänger verwendet werden, beispielsweise für einen Kühlschrank oder eine Klimaanlage. Weitere Leitungen können für andere Anwendungen benutzt werden.

Die in Figur 4 gezeigte konkrete Gestaltungsform des Leitungssatzes ist nur ein erläuterndes Beispiel der zugrundeliegenden Topologie des Leitungssatzes. Die konkreten Dimensionen hängen von den Positionen der Anschlussstellen, dem Montageort der erfindungsgemässen Steuerungsvorrichtung usw. ab.

Figur 5 zeigt eine weitere Ausgestaltungsform eines Leitungssatzes 15, welcher über ein zusätzliches sechstes Ende 16f verfügt. Dieses dient dem Anschluss an eine Steuerleitung für eine Leuchte des Zugfahrzeugs, beispielsweise eines Bremslichtes oder Blinklichtes. Falls ein Anschluss an mehrere Leuchten gewünscht sein sollte, sind entsprechend auch mehrere sechste Enden 16f nötig. Der gezeigte Leitungssatz 15 ist mit zwei unabhängigen fünften Enden 16e ausgestattet, welche einen Anschluss an zwei separate single-wire-basierte Daten-Busse ermöglichen.

Es ist möglich, die elektronische Vorrichtung der erfindungsgemässen Steuerungsvorrichtung rein hardware-basiert zu realisieren. Dies macht jedoch eine Anpassung an die verschiedenen bekannten oder auch neuen Fahrzeugtypen kompliziert. Bei einer vorteilhaften Ausgestaltung der erfindungsgemässen Steuerungsvorrichtung enthält diese einen Mikrokontroller oder Mikroprozessor, auf welchem ein Computerprogramm lauffähig ist, das die Tätigkeiten der erfindungsgemässen Steuerungsvorrichtung steuert und überwacht. Das Computerprogramm kann beispielsweise auf dem Kontrollmodul der elektronischen Vorrichtung lauffähig sein.

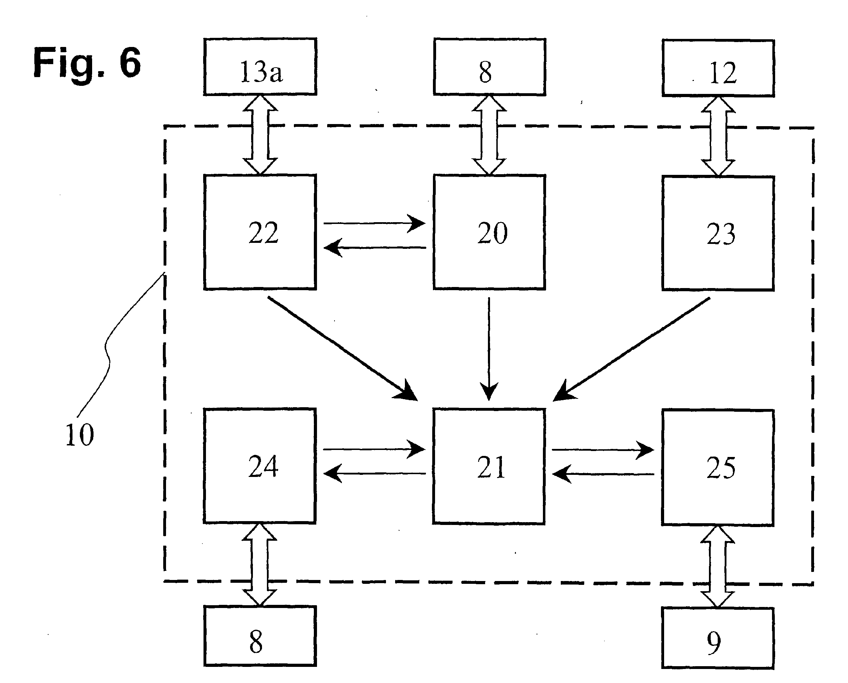

Figur 6 zeigt schematisch einzelne Routinen eines auf der erfindungsgemässen Steuerungsvorrichtung, beispielsweise auf dem Kontrollmoduls 10, laufenden Computerprogramms, die Wechselwirkungen der Routinen untereinander und mit weiteren Modulen 8, 9, 12, 13a der elektronischen Vorrichtung.

In einer grundlegenden Variante evaluiert eine Nachrichtenevaluationsroutine 20 von einem seriellen Daten-Bus abgehörte Nachrichten, welche dem Kontrollmodul 10 von einem Sender-Empfänger-Modul 8 laufend mitgeteilt werden. Die Routine 20 sortiert die empfangenen Nachrichten in relevante und irrelevante bzw. fehlerhafte Nachrichten. Relevant sind beispielsweise Steuerungsbefehle für Leuchten des Zugfahrzeugs. Die relevanten Nachrichten werden an eine Interpretationsroutine 21 weitergeleitet, ebenso relevante Informationen zum allgemeinen Status des seriellen Daten-Busses.

Die Interpretationsroutine 21 interpretiert die relevanten Nachrichten, trifft basierend darauf Entscheidungen, und gibt Anweisungen an eine Steuerungsroutine 25. Die Steuerungsroutine 25 wiederum steuert und überwacht das Ansteuerungsmodul 9. Fehlermeldungen des Ansteuerungsmoduls 9 können von der Steuerungsroutine 25 verarbeitet und der Interpretationsroutine 21 mitgeteilt werden. Diese kann daraufhin das weitere Vorgehen anpassen.

Ist ein Überwachungsmodul 12 in die elektronische Vorrichtung 7 integriert, wertet eine Überwachungsroutine 23 die vom entsprechenden Modul 12 gelieferten Daten bzgl. der korrekten Funktion der elektrischen und elektronischen Anlagen 5a des Anhängers aus. Die Resultate werden der Interpretationsroutine 21 mitgeteilt, die darauf reagieren kann. Fällt beispielsweise das rechte Blinklicht des Anhängers aus, registriert das Überwachungsmodul 12 einen Abfall des Stromverbrauchs und meldet dies dem Kontrollmodul 10. Die Überwachungsroutine 23 teilt die Fehlfunktion der Interpretationsroutine 21 mit, die daraufhin Steueranweisungen für das rechte Blinklicht über die Steuerungsroutine 25 auf das rechte Rücklicht, Bremslicht oder Standlicht umleiten kann. Voraussetzung dafür ist ein entsprechend konzipiertes Bordnetz 5 des Anhängers.

In einer weiteren vorteilhaften Variante umfasst das auf dem Kontrollmodul 10 laufende Computerprogramm eine Nachrichtengenerationsroutine 24, welche auf Anweisung der Interpretationsroutine 21 Nachrichten erzeugt, die daraufhin über ein Sender-Empfänger-Modul 8 auf dem seriellen Daten-Bus versendet werden. Bei Ausfall des rechten Blinklichts kann beispielsweise durch die Nachrichtengenerationsroutine 24 eine Fehlfunktionsmeldung erzeugt werden, welche der Fehlfunktionsmeldung des rechten Blinklichts des Zugfahrzeugs entspricht. Dem Fahrer wird daraufhin von der Bordelektronik des Zugfahrzeugs eine Fehlfunktion des rechten Blinkers mitgeteilt, woraufhin dieser reagieren kann. Der Vorteil einer solchen Lösung ist, dass bei der Konfiguration der Bordelektronik des Zugfahrzeugs keinerlei Änderungen notwendig sind.

Die Nachrichtengenerationsroutine 24 kann auch Meldungen über die Funktion der elektrischen Anlagen des Anhängers und über die Funktion der erfindungsgemässen Steuerungsvorrichtung an eine Gegenstation senden, welche an den gleichen seriellen Daten-Bus angeschlossen ist. Eine solche Gegenstation kann beispielsweise im Fahrerraum angebracht sein und den Status der elektrischen Anlagen des Anhängers direkt anzeigen. Die Gegenstation kann auch so gestaltet sein, dass der Fahrer gewisse Funktionen der erfindungsgemässen Steuerungsvorrichtung fernsteuern kann, indem sie seine Anweisungen über den seriellen Daten-Bus an die Steuerungsvorrichtung schickt.

Das Computerprogramm kann auch eine Typenevaluationsroutine 22 beinhalten, welche feststellen kann, um welchen Typ ist sich beim Zugfahrzeug handelt. Die entsprechenden Informationen kann die Routine 22 von einem Anpassungsmodul 13a erhalten. Die Typenevaluationsroutine 22 kann jedoch auch so realisiert sein, dass sie von der Nachrichtenevaluationsroutine 20 alle oder einen Teil der vom Sender-Empfänger-Modul 8 abgehörten Nachrichten erhält, und aufgrund der Art der Nachrichten den Zugfahrzeugtyp selbstständig feststellt. Diese Information kann sie dann wiederum der Nachrichtenevaluationsroutine 20 und der Interpretationsroutine 21 mitteilen. Die Nachrichtenevaluationsroutine 20 kann daraufhin die Sortierung anpassen, und die Interpretationsroutine 21 die Bedeutung der empfangenen Nachrichten richtig beurteilen.

Es versteht sich, dass die vorstehend erwähnten Beispiele nicht nur jeweils in den gezeigten Kombinationen, sondern auch in anderen Kombinationen ausgeführt werden können. Die Zeichnungen sollen nicht einschränkend gedeutet werden.

Bezugszeichenliste
- 1: Steuerungs- und Überwachungsvorrichtung
- 2: Masse des Zugfahrzeugs
- 3: Elektrische Speisung des Zugfahrzeugs
- 4: Masse des Anhängers
- 5: Bordnetz des Anhängers
- 5a, 5a': Elektrische oder elektronische Anlage
- 5b: Steckverbindung
- 6: Serieller Daten-Bus
- 7: Elektronische Vorrichtung
- 8: Sender-Empfänger-Modul
- 9: Ansteuerungsmodul
- 10: Kontrollmodul
- 11: Endstufen
- 12: Überwachungsmodul
- 13: Interpretationsmodul
- 13a: Anpassungsmodul
- 14: Leuchte
- 15: Leitungssatz
- 16a: Erstes Ende
- 16b: Zweites Ende
- 16c: Drittes Ende
- 16d: Viertes Ende
- 16e, 16e': Fünftes Ende
- 16f: Sechstes Ende
- 17, 17': Steckverbindung
- 20: Nachrichtenevaluationsroutine
- 21: Interpretationsroutine
- 22: Typenevaluationsroutine
- 23: Überwachungsroutine
- 24: Nachrichtengenerationsroutine
- 25: Steuerungsroutine
- 26: Zugfahrzeug
- 27: Anhänger

## Patentansprüche

1. Vorrichtung (1) für die Steuerung und Überwachung von mindestens einer sicherheitsrelevanten elektrischen und/oder elektronischen Anlage (5a) eines an ein Zugfahrzeug (26) gekoppelten Anhängers (27) oder einer am Zugfahrzeug befestigten Fahrradträger-Vorrichtung, wobei die Vorrichtung (1) an eine elektrische Speisung (3) des Zugfahrzeugs (26), ein Bordnetz (5) des Anhängers (27) und an mindestens eine Masse (2, 4) des Zugfahrzeugs (26) und/oder des Anhängers (27) anschließbar ist, und wobei mit der Vorrichtung (1) Daten von mindestens einem seriellen Daten-Bus (6) des Zugfahrzeugs (26) empfangbar und auswertbar sind; Daten auf mindestens einer seriellen Daten-Bus (6) des Zugfahrzeugs (26) versendbar sind, aufgrund der vom mindestens einen seriellen Daten-Bus (6) empfangenen Daten die elektrischen und/oder elektronischen Anlagen (5a) teilweise oder vollständig ausschaltbar und einschaltbar sind,
**dadurch gekennzeichnet,**
**daß** die Vorrichtung (1) über zwei getrennte Leitungen an die elektrische Speisung (3) des Zugfahrzeugs (26) angeschlossen ist, wobei ein Defekt an einer Speisungsleitung dem Fahrer durch ein Interface oder Anzeigemittel anzeigbar ist.

2. Vorrichtung nach Anspruch 1, **dadurch gekennzeichnet, daß** mit der Vorrichtung der Typ des Zugfahrzeugs (26) durch Evaluation von über den mindestens einen seriellen Daten-Bus (6) empfangenen Daten und/oder einem Anpassungsmodul (13a) gelieferten Daten bestimmbar ist.

3. Vorrichtung nach Anspruch 1, **dadurch gekennzeichnet, daß** aufgrund der vom mindestens einen seriellen Daten-Bus (6) empfangenen Daten die Vorrichtung in einen Ruhemodus bringbar ist.

4. Vorrichtung nach Anspruch 1, **gekennzeichnet durch** ein Ansteuerungsmodul (9), mittels dem bei einem Defekt einer sicherheitsrelevanten elektrischen und/oder elektronischen Anlage (5a) des Anhängers (27) eine andere elektrische und/oder elektronische Anlage (5a) des Anhängers (27) aktivierbar ist.

5. Vorrichtung nach Anspruch 1, **dadurch gekennzeichnet, daß** die Daten vom seriellen Daten-Bus (6) über Kabel oder drahtlos empfangbar und/oder versendbar sind.

6. Vorrichtung nach Anspruch 1, **dadurch gekennzeichnet, daß** im montierten Zustand die Vorrichtung im Zugfahrzeug (26) angeordnet ist, wobei Anschlüsse an der Vorrichtung (1) für den Anhänger (27), insbesondere für die das Bordnetz (5) des Anhängers (27) vorhanden sind, welche zu einer lösbaren Steckverbindung (5b) zwischen dem Zugfahrzeug (26) und dem Anhänger (27) führen.

7. Vorrichtung nach Anspruch 1, **dadurch gekennzeichnet, daß** im montierten Zustand die Vorrichtung im Anhänger (27) angeordnet ist, wobei Anschlüsse an der Vorrichtung (1) für das Zugfahrzeug (26), insbesondere für die elektrische Speisung (3) des Zugfahrzeuges (26), vorhanden sind, welche zu einer lösbaren Steckverbindung (5b) zwischen dem Zugfahrzeug (26) und dem Anhänger (27) führen.

8. Vorrichtung nach Anspruch 1, **dadurch gekennzeichnet, daß** die elektronische Vorrichtung (7) in einem Gehäuse untergebracht ist, wobei das Gehäuse mit einer einzigen Steckverbindung ausgestattet ist.

9. Vorrichtung nach Anspruch 8, **dadurch gekennzeichnet, daß** das Gehäuse gegen elektromagnetische Störungen abgeschirmt ist, insbesondere durch Verwendung eines Metallgehäuses oder einer metallhaltigen Kunststoffmasse.

10. Vorrichtung nach Anspruch 1, **dadurch gekennzeichnet, daß** die Vorrichtung (1) eine elektronische Vorrichtung (7) beinhaltet, welche
- ein Empfänger-Modul (8), welches an einen seriellen Daten-Bus (6) des Zugfahrzeugs (26) anschließbar ist, und mit welchem Daten vom seriellen Daten-Bus (6) empfangbar sind;
- ein Ansteuerungsmodul (9), mit welchem analoge und/oder digitale Steuersignale für den Betrieb der elektrischen und/oder elektronischen Anlagen (5a) des Anhängers (27) erzeugbar sind; und
- ein Kontrollmodul (10), auf welchem ein Computerprogramm zur Steuerung der Vorrichtung (1) lauffähig ist,
umfaßt,
und wobei zwischen dem Kontrollmodul (10) und dem Empfänger-Modul (8) und zwischen dem Kontrollmodul (10) und Ansteuerungsmodul (9) Daten übertragbar sind.

11. Vorrichtung nach Anspruch 10, **dadurch gekennzeichnet, daß** das Empfänger-Modul (8) ein Sender-Empfänger-Modul ist, mit welchem sowohl Daten vom seriellen Daten-Bus (6) empfangbar als auch Daten über den seriellen Daten-Bus (6) versendbar sind.

12. Vorrichtung nach Anspruch 10, **dadurch gekennzeichnet, daß** die elektronische Vorrichtung (7) ein mit dem Bordnetz (5) des Anhängers (27) verbindbares Überwachungsmodul (12) umfaßt, mit welchem der Betrieb der elektrischen und/oder elektronischen Anlagen (5a) des Anhängers (27) überwachbar ist, wobei zwischen dem Überwachungsmodul (12) und dem Kontrollmodul (10) Daten übertragbar sind.

13. Vorrichtung nach Anspruch 10, **dadurch gekennzeichnet, daß** die elektronische Vorrichtung (7) mindestens ein Interpretationsmodul (13) umfaßt, und die Vorrichtung (1) an mindestens eine Steuerleitung einer Leuchte (14) des Zugfahrzeugs (26) anschließbar ist, wobei mit dem mindestens einen Interpretationsmodul (13) die an der mindestens einen Steuerleitung anliegenden Steuersignale meßbar und interpretierbar sind, und daß Daten vom Interpretationsmodul (13) zum Ansteuerungsmodul (9) übertragbar sind.

14. Verfahren zur Steuerung und Überwachung von mindestens einer sicherheitsrelevanten elektrischen und/oder elektronischen Anlage (5a) eines an ein Zugfahrzeug (26) gekoppelten Anhängers (27) oder Fahrradträgers mittels einer über zwei getrennte Leitungen an eine elektrische Speisung (3) des Zugfahrzeuges (26) angeschlossenen Vorrichtung (1) nach einem der vorhergehenden Ansprüche, wobei
- Nachrichten von mindestens einem seriellen Daten-Bus (6) des Zugfahrzeugs (26) empfangen werden;
- die empfangenen Nachrichten ausgewertet werden;
- analoge und/oder digitale Steuersignale erzeugt werden; und
- die mindestens eine sicherheitsrelevante elektrische und/oder elektronische Anlage (5a) durch die Steuersignale angesteuert wird;
und ein Defekt an einer Speiseleitung dem Fahrer durch ein Interface oder Anzeigemittel angezeigt wird.

15. Verfahren nach Anspruch 14, **dadurch gekennzeichnet, daß** die empfangenen Nachrichten ausgewertet werden, indem
- die Nachrichten gefiltert werden, wobei irrelevante und fehlerhafte Nachrichten verworfen werden; und
- die nicht verworfenen Nachrichten interpretiert werden.

16. Verfahren nach einem der Ansprüche 14 oder 15, **dadurch gekennzeichnet, daß** elektrische und/oder elektronische Anlagen (5a) des Anhängers (27) überwacht werden.

17. Verfahren nach einem der Ansprüche 14 bis 16, **dadurch gekennzeichnet, daß** Nachrichten auf mindestens einem seriellen Daten-Bus (6) des Zugfahrzeugs (26) versendet werden.

18. Verfahren nach einem der Ansprüche 14 bis 17, **dadurch gekennzeichnet, daß** mindestens ein Steuersignal für eine Leuchte (14) des Zugfahrzeugs (26) überwacht und interpretiert wird.

## Claims

1. Apparatus (1) for the control and monitoring of at least one safety-related electrical and/or electronic device (5a) on a trailer (27) coupled to a towing vehicle (26) or a cycle carrier connected to the towing vehicle, wherein the apparatus (1) is connectable to an electrical supply (3) on the towing vehicle (26), an electrical system (5) of the trailer (27) and to at least one ground connection (2, 4) on the towing vehicle (26) and/or the trailer (27) and wherein data from at least one serial data-bus (6) on the towing vehicle (26) may be received and analysed with the apparatus (1); data on at least one data-bus (6) on the towing vehicle (26) may be transmitted, as a result of the data received from at least one serial data-bus (6) the electrical and/or electronic devices (5a) may be partially or completely switched off and on, **characterised in that** the apparatus (1) is connected to the electrical supply (3) of towing vehicle (26) by means of two separate lines, whereby a defect on one supply line may be indicated to the driver by an interface or indicator.

2. Apparatus as claimed in claim 1, **characterised in that** the type of the towing vehicle (26) may be determined with the apparatus by evaluation of data received via the at least one serial data-bus (6) and/or data supplied to an adaptor module (13a).

3. Apparatus as claimed in claim 1, **characterised in that** the apparatus may be brought into a sleep mode as a result of the data received from the at least one serial data-bus (6).

4. Apparatus as claimed in claim 1, **characterised by** a control module (9), by means of which, in the event of a defect in a safety-related electric and/or electronic device (5a) on the trailer (27), another electrical and/or electronic device (5a) on the trailer (27) may be activated.

5. Apparatus as claimed in claim 1, **characterised in that** the data from the serial data-bus (6) may be received and/or transmitted via cables or wirelessly.

6. Apparatus as claimed in claim 1, **characterised in that** in the installed state the apparatus is arranged in the towing vehicle (26), whereby connections are present on the apparatus (1) for the trailer (27), particularly for the electrical system (5) of the trailer (27), which lead to a releasable plug connection (5b) between the towing vehicle (26) and the trailer (27).

7. Apparatus as claimed in claim 1, **characterised in that** in the installed state the apparatus is arranged in the trailer (27), whereby connections are present on the apparatus (1) for the towing vehicle (26), particularly for the electrical supply (3) on the towing vehicle (26), which lead to a releasable plug connection (5b) between the towing vehicle (26) and the trailer (27).

8. Apparatus as claimed in claim 1, **characterised in that** the electronic apparatus (7) is accommodated in a housing, the housing being equipped with a single plug connection.

9. Apparatus as claimed in claim 8, **characterised in that** the housing is shielded from electromagnetic disturbances, particularly by the use of a metal housing or a metal-containing plastic composition.

10. Apparatus as claimed in claim 1, **characterised in that** the apparatus (1) includes an electronic apparatus (7), which includes
- a receiving module (8) which is connectable to a serial data-bus (6) on the towing vehicle (26) and with which data is receivable from the serial data-bus (6);
- a control module (9) with which analogue and/or digital control signals are producable for the operation of the electrical and/or electronic devices (5a) on the trailer (27); and
- a control module (10) on which a computer program for controlling the apparatus (1) is capable of running
and wherein data is transmissible between the control module (10) and the receiving module (8) and between the control module (10) and control module (9).

11. Apparatus claimed in claim 10, **characterised in that** the receiving module (8) is a transmitting-receiving module, with which data is receivable from the serial data-bus (6) and data is transmissible via the serial data-bus (6).

12. Apparatus claimed in claim 10, **characterised in that** the electronic apparatus (7) includes a monitoring module (12), which is connectable to the electrical system (5) on the trailer (27) and with which the operation of the electrical and/or electronic devices (5a) on the trailer (27) may be monitored, whereby data is transmissible between the monitoring module (12) and the control module (10).

13. Apparatus claimed in claim 10, **characterised in that** the electronic apparatus (7) includes at least one interpretation module (13) and the apparatus (1) is connectable to at least one control line of a lamp (14) on the towing vehicle (26), wherein the control signals on the at least one control line are measurable and interpretable with the at least one interpretation module (13) and that data is transmissible from the interpretation module (13) to the control module (9).

14. A method of controlling and monitoring at least one safety-related electric and/or electronic device (5a) on a trailer (27) or cycle carrier coupled to a towing vehicle (26) by means of an apparatus (1) connected to an electrical supply (3) on the towing vehicle (26) via two separate lines as claimed in one of the preceding claims, wherein
- information is received from at least one serial data-bus (6) on the towing vehicle (26);
- the received data is analysed;
- analogue and/or digital control signals are produced; and
- the at least one safety-related electrical and/or electronic device (5a) is activated by control signals;
and a defect on one supply line is indicated to the driver by an interface or indicator.

15. A method as claimed in Claim 14, **characterised in that** the received information is analysed by
- filtering the information, whereby irrelevant and flawed information is rejected; and
- interpreting the information which is not rejected.

16. A method as claimed in one of Claims 14 or 15, **characterised in that** the electrical and/or electronic devices (5a) of the trailer (27) are monitored.

17. A method as claimed in one of Claims 14 to 16, **characterised in that** the information is transmitted on at least one serial data bus (6) of the towing vehicle (26).

18. A method as claimed in one of Claims 14 to 17, **characterised in that** at least one control signal for a light (14) of the towing vehicle (26) is monitored and interpreted.

## Revendications

1. Dispositif (1) pour la commande et la surveillance d'au moins une installation électrique et/ou électronique (5a) importante pour la sécurité dans une remorque (27) attelée à un véhicule tracteur (26) ou un dispositif porte-vélos fixé au véhicule tracteur, lequel dispositif (1) peut être raccordé à une alimentation électrique (3) du véhicule tracteur (26), à un réseau de bord (5) de la remorque (27) et à au moins une masse (2, 4) du véhicule tracteur (26) et/ou de la remorque (27), et lequel dispositif (1) peut recevoir et interpréter des données d'au moins un bus série de données (6) du véhicule tracteur (26) et émettre dés données vers au moins un bus série de données (6) du véhicule tracteur (26), les installations électriques et/ou électroniques (5a) pouvant être entièrement ou partiellement désactivées ou activées en fonction des données reçues de l'au moins un bus série de données (6),
**caractérisé en ce que**
le dispositif (1) est raccordé par deux lignes séparées à l'alimentation électrique (3) du véhicule tracteur (26), un défaut sur une ligne d'alimentation pouvant être signalé par une interface ou un moyen indicateur.

2. Dispositif selon la revendication 1, **caractérisé en ce que** le dispositif permet de déterminer le type du véhicule tracteur (26) par l'évaluation des données reçues sur l'au moins un bus série de données (6) et/ou des données fournies par un module adaptateur (13a).

3. Dispositif selon la revendication 1, **caractérisé en ce que** le dispositif peut être mis dans un mode de veille en fonction des données reçues de l'au moins un bus série de données (6).

4. Dispositif selon la revendication 1, **caractérisé en ce qu'**il comporte un module d'activation (9) au moyen duquel, en cas de défaut d'une installation électrique et/ou électronique (5a) importante pour la sécurité de la remorque (27), une autre installation électrique et/ou électronique (5a) de la remorque (27) peut être activée.

5. Dispositif selon la revendication 1, **caractérisé en ce que** les données du bus série de données (6) peuvent être reçues et/ou émises par câble ou sans fil.

6. Dispositif selon la revendication 1, **caractérisé en ce que** lorsqu'il est monté, le dispositif est disposé dans le véhicule tracteur (26), des connexions étant prévues sur le dispositif (1) pour la remorque (27), et en particulier pour le réseau de bord (5) de la remorque (27), qui conduisent à une connexion enfichée (5b) pouvant être défaite entre le véhicule tracteur (26) et la remorque (27).

7. Dispositif selon la revendication 1, **caractérisé en ce que** lorsqu'il est monté, le dispositif est disposé dans la remorque (27), des connexions étant prévues sur le dispositif (1) pour le véhicule tracteur (26), en particulier pour l'alimentation électrique (3) du véhicule tracteur (26), qui conduisent à une connexion enfichée (5b) pouvant être défaite entre le véhicule tracteur (26) et la remorque (27).

8. Dispositif selon la revendication 1, **caractérisé en ce que** le dispositif électronique (7) est logé dans un boîtier, lequel boîtier est équipé d'une seule connexion enfichée.

9. Dispositif selon la revendication 8, **caractérisé en ce que** le boîtier est protégé des interférences électromagnétiques, en particulier par l'utilisation d'un boîtier métallique ou d'une matière plastique contenant du métal.

10. Dispositif selon la revendication 1, **caractérisé en ce que** le dispositif (1) contient un dispositif électronique (7) comprenant
- un module récepteur (8) qui peut être connecté à un bus série de données (6) du véhicule tracteur (26), et avec lequel des données du bus série de données (6) peuvent être reçues ;
- un module d'activation (9), avec lequel des signaux de commande analogiques et/ou numériques peuvent être produits pour le fonctionnement des installations électriques et/ou électroniques (5a) de la remorque (27) ; et
- un module de contrôle (10), sur lequel un programme d'ordinateur pour la commande du dispositif (1) peut être exécuté,
et dans lequel des données peuvent être transmises entre le module de contrôle (10) et le module récepteur (8) et entre le module de contrôle (10) et le module d'activation (9).

11. Dispositif selon la revendication 10, **caractérisé en ce que** le module récepteur (8) est un module émetteur-récepteur, avec lequel des données peuvent être reçues du bus série de données (6) et des données peuvent être émises via le bus série de données (6).

12. Dispositif selon la revendication 10, **caractérisé en ce que** le dispositif électronique (7) comprend un module de surveillance (12) pouvant être connecté au réseau de bord (5) de la remorque (27), avec lequel le fonctionnement des installations électriques et/ou électroniques (5a) de la remorque (27) peut être surveillé, des données pouvant être transmises entre le module de surveillance (12) et le module de contrôle (10).

13. Dispositif selon la revendication 10, **caractérisé en ce que** le dispositif électronique (7) comprend au moins un module d'interprétation (13), et le dispositif (1) peut être connecté à au moins une lampe (14) du véhicule tracteur (26), l'au moins un module d'interprétation (13) pouvant mesurer et interpréter les signaux de mesure présents sur l'au moins une ligne de commande, et **en ce que** des données peuvent être transmises du module d'interprétation (13) au module d'activation (9).

14. Procédé de commande et de surveillance d'au moins une installation électrique et/ou électronique (5a) importante pour la sécurité d'une remorque (27) ou d'un porte-vélos accrochés à un véhicule tracteur (26) au moyen d'un dispositif (1) selon l'une des revendications précédentes connecté par deux lignes séparées à une alimentation électrique (3) du véhicule tracteur (26), dans lequel
- des messages sont reçus en provenance d'au moins un bus série de données (6) du véhicule tracteur (26) ;
- les messages reçus sont interprétés ;
- des signaux de commande analogiques et/ou numériques sont produits ; et
- l'au moins une installation électrique et/ou électronique (5a) importante pour la sécurité est activée par les signaux de commande ;
et un défaut sur une ligne de commande est signalé au conducteur par une interface ou un moyen d'affichage.

15. Procédé selon la revendication 14, **caractérisé en ce que** les messages reçus sont interprétés
- en filtrant les données, les messages non pertinents ou erronés étant rejetés ; et
- en interprétant les messages non rejetés.

16. Procédé selon l'une des revendications 14 ou 15, **caractérisé en ce que** des installations électriques et/ou électroniques (5a) de la remorque (27) sont surveillées.

17. Procédé selon l'une des revendications 14 à 16, **caractérisé en ce que** des messages sont émis sur au moins un bus série de données (6) du véhicule tracteur (26).

18. Procédé selon l'une des revendications 14 à 17, **caractérisé en ce qu'**au moins un signal de commande pour une lampe (14) du véhicule tracteur (26) est surveillé et interprété.
